Europäisches Patentamt

European Patent Office

Office européen des brevets

(11) Veröffentlichungsnummer : **0 437 562 B1**

(12) **EUROPÄISCHE PATENTSCHRIFT**

(45) Veröffentlichungstag der Patentschrift :
30.09.92 Patentblatt 92/40

(21) Anmeldenummer : **90910704.7**

(22) Anmeldetag : **06.07.90**

(86) Internationale Anmeldenummer :
**PCT/EP90/01094**

(87) Internationale Veröffentlichungsnummer :
**WO 91/00848 24.01.91 Gazette 91/03**

(51) Int. Cl.⁵ : **C01G 21/10**

(51) Int. Cl.$^5$ : **C01G 21/10**

---

(54) **VERFAHREN ZUR BESCHLEUNIGTEN HERSTELLUNG VON MENNIGE SOWIE VORRICHTUNG DAFÜR.**

---

(30) Priorität : **10.07.89 DE 3922654**

(43) Veröffentlichungstag der Anmeldung :
**24.07.91 Patentblatt 91/30**

(45) Bekanntmachung des Hinweises auf die
Patenterteilung :
**30.09.92 Patentblatt 92/40**

(84) Benannte Vertragsstaaten :
**DE ES FR GB IT**

(56) Entgegenhaltungen :
**EP-A- 0 356 958**
**FR-A- 2 140 861**

(56) Entgegenhaltungen :
**Journal of applied Chemistry & Biotechnology,
Band 23, Nr.2, Februar 1973, K. Myazaki:
"Autocatalysis in calcination ofpowdered lead", Seiten93-100 , siehe Seiten 93,94
Patent Abstracts of Japan, Band 7, Nr. 118,
(C-167) (1263), 21. Mai 1983 & JP A 5836927
(SHINKOUBE DENKI K.K.) 4. März1983 siehe
Zusammenfassung**

(73) Patentinhaber : **HEUBACH & LINDGENS
GMBH & CO KG
Heubachstrasse
W-3394 Langelsheim (DE)**

(72) Erfinder : **MARX, Reinhard
Am Butterberg 6
W-3388 Bad Harzburg (DE)**

(74) Vertreter : **Müller-Boré & Partner
Patentanwälte
Isartorplatz 6 Postfach 26 02 47
W-8000 München 2 (DE)**

EP 0 437 562 B1

## Beschreibung

Die chemische Grundreaktion, nach der Mennige großtechnisch auf thermischem Wege hergestellt wird, lautet

$$6 \; PbO + O_2 \rightleftharpoons 2 \; Pb_3O_4 \; .$$

Diese Reaktion verläuft im Gegensatz zur direkten Oxidation von metallischem Blei zu zweiwertigem Oxid recht langsam, so daß als geschwindigkeitsbestimmende Reaktionsschritte Diffusionsvorgänge im Festkörper angenommen werden; letzteres wird auch dadurch erhärtet, daß die vorgelegte Oxidmodifikation einen deutlichen Einfluß ausübt.

Die langen Reaktionszeiten in den meist in Anwendung stehenden Chargenöfen wurden daher meist als naturgegeben hingenommen, wenn es auch nicht an Versuchen gefehlt hat, den Mennigeprozeß zu verbessern:

So ist aus der oben angeführten Reaktionsgleichung auf den ersten Blick ersichtlich, daß die Reaktionsgeschwindigkeit unter anderem dem Sauerstoffpartialdruck proportional sein muß. Da die Reaktion leicht exotherm verläuft, wird die Rückreaktion immer stärker, je höher die Temperatur ist; der Zersetzungspunkt für die Mennige kann aber durch Erhöhung des Sauerstoffpartialdrucks in der Umgebungsatmosphäre nach oben verschoben werden, wobei selbstverständlich auch alle anderen die Reaktion beeinflussenden Schritte beschleunigt werden.

Auf diesen Überlegungen aufbauend, wurden verschiedene Verfahren entwickelt, bei denen entweder statt Luft reiner Sauerstoff der Reaktion zugeführt wird oder unter höherem Gesamtdruck gearbeitet wird, wie z.B. L. Holub, Bleioxide in der Vergangenheit und Gegenwart, Chemické Listy 94 (1970), 10, S. 1009-1031, IT-PS 485215 und DE-PS 633620 und 590481 zeigen. Leider werden dort keine Zahlen genannt, aus denen die Reaktionsgeschwindigkeit und der Energieverbrauch hervorgingen; auch scheinen sich die entsprechenden Verfahren kaum in der Praxis durchgesetzt zu haben, obwohl sie bereits um 1930 entwickelt wurden.

Es wurde auch versucht, die Mennigebildung zu beschleunigen, indem man den Kontakt zwischen festem Schüttgut und Atmosphäre verbessert.

Hierzu ist besonders die DE-PS 633620 zu nennen, wo Sand als Auflockerungsmittel zugesetzt wird, und die ES-PS 238670, bei der die Reaktion in einer Kugelmühle durchgeführt wird. Auch diese Verfahren haben sich nicht großtechnisch überzeugend eingeführt, da sie dem höheren technischen Aufwand offenbar keine hinreichenden anderen Vorteile gegenüberstellen konnten.

Zu letzteren Verfahren ist prinzipiell auch der in der IT-PS 485215 beschriebene Prozeß zu zählen, bei dem ein inniger Kontakt zwischen Blei und Sauerstoff durch Verdampfung des Bleis erreicht wird; hier war es sicherlich der hohe Energieaufwand, der dem sonst sehr interessanten Verfahren nicht zu weiter Verbreitung verholfen hat.

Aus C.A. Vol 54 (1960), Nr. 21671 h ist es bekannt, daß die Oxidation von PbO zu $Pb_3O_4$ im Fließbett durch die Diffusion von Sauerstoff bestimmt wird und eine Temperaturerhöhung auf 560°C und eine Erhöhung des Sauerstoffdrucks auf 1 Atm. die Reaktionsgeschwindigkeit auf das 2 1/2-fache durch entsprechende Erhöhung der Diffusionsgeschwindigkeit erhöhen könnte.

Die GB-PS 559 994 zeigt einen Mennigereaktor, bei dem das Bleioxid durch ein senkrechtes Rührwerk in Bewegung gehalten und die vorzugsweise vorerhitzten oxidierenden Gase von unten in den Reaktor eingeführt werden, so daß sie nicht nur mit dem Material auf ihrem ganzen Weg zur Oberfläche chemisch reagieren, sondern auch dazu beitragen, die Temperatur des Materials bei konstantem Niveau zu halten. Auf diese Weise kann man die oxidierenden Gase auch unter Druck einführen, was einen bemerkenswerten Effekt auf die Reaktionsgeschwindigkeit hat. Allerdings handelt es sich hierbei um eine Chargenreaktion, wobei eine Charge bei etwa 480°C 8 h zur Überführung in ein Material mit 90 % $Pb_3O_4$ braucht, was vorher 20 bis 30 h erforderte.

Die US-PS 3 450 503 zeigt ein Verfahren zur Herstellung von Bleiglätte, das dann in einer zweiten Verfahrensstufe zu Mennige oxidiert werden kann. Die Glätteherstellung erfolgt, indem geschmolzenes Blei in einer Zone hoher Gasturbulenz versprüht und mit Luft oder Sauerstoff angereicherter Luft, die auch mit Überdruck zugeführt werden kann, zu Bleiglätte oxidiert. Das nach diesem Verfahren, das als "Goldschmidt"-Verfahren bekannt ist, hergestellte fein disperse PbO kann dann anschließend in einem Etagenofen zu hochdisperser Bleimennige oxidiert werden. Die Oxidation von Blei, die praktisch im Wirbelbett abläuft, führt also nicht in einer Stufe zu Mennige und die Oxidation von Bleiglätte zu Mennige erfolgt in herkömmlicher Weise.

Aufgabe der Erfindung ist eine wesentliche Abkürzung der Reaktionszeit der Oxidation von PbO zu $Pb_3O_4$ gegenüber bekannten Verfahren bei Erzielung der mindestens gleichen Mennige-Qualität, z.B. ausgedrückt

in % $PbO_2$.

Bei eigenen Entwicklungsarbeiten auf dem Gebiet der Bleioxidation wurde nun gefunden, daß die Oxidationsgeschwindigkeit besonders hoch ist, wenn in einem Fließbett unter bestimmten Bedingungen gearbeitet wird. Es hat sich nämlich bestätigt, daß bei allen diesen bekannten technischen Verfahren - eine Ausnahme bilden. vielleicht die IT-PS 485215 und die GB-PS 559 994 - eine wesentliche Reaktionsverzögerung dadurch entsteht, daß der Sauerstoff innerhalb der Festkörperschüttung verbraucht wird und nicht schnell genug nachdiffundieren kann, so daß tatsächlich an der Partikeloberfläche ein sehr geringer Partialdruck besteht. Indem das zu oxidierende Bleioxid in einem Rührwerksreaktor durch ein Rührwerk wie ein Fließbett in Schwebe gehalten wird, läßt sich der erwähnte Nachteil bei den bisherigen Verfahren vermeiden; allerdings ist es gleichzeitig wesentlich, daß die zu oxidierende Menge an Bleiglätte pro Zeiteinheit geeignet gesteuert wird.

Die Aufgabe der Erfindung zur Herstellung von Mennige mit beträchtlich größerer Geschwindigkeit als dies bis jetzt möglich ist, wird demgemäß dadurch gelöst, daß das zu oxidierende Bleioxid an der Partikeloberfläche mit genügend Sauerstoff versorgt wird, und daß aus dem fertigoxidierten Fließbett jeweils nur ein Teil des Fertigproduktes abgezogen und durch neues, zu oxidierendes Bleioxid ersetzt wird.

Die Erzeugung eines Fließbettes ist die einfachste Möglichkeit, den oben geschilderten grundsätzlichen Nachteil der Sauerstoffverarmung innerhalb der Festkörperschüttung, auszuschalten. Die Aufrechterhaltung des Fließbettes in einem Rührwerksreaktor mittels eines kräftigen Rührwerks hat sich als besonders vorteilhaft herausgestellt, denn so wird vermieden, daß die Reaktionsprodukte Zusammenballungen bilden können. Wenn man jedoch jeweils das ganze fertigoxidierte Verfahrensprodukt entnimmt und durch neue Bleiglätte ersetzt, erhält man überraschenderweise auf die Gesamtproduktion umgerechnet beträchtlich Längere Reaktionszeiten als wenn man nur einen Teil des Fertigproduktes abzieht und durch neues, zu oxidierendes Bleioxid ersetzt. Vorzugsweise wird 1/4 bis die Hälfte des Reaktorinhaltes vom fertigoxidierten Reaktionsproduckt abgezogen und durch neuen Vorstoff (PbO) ersetzt.

Auf diese Weise wird ein starke Verminderung de: Verfahrenszeit und damit eine wesentliche Kostenminderung bewirkt, was auch zur Folge hat, daß für den gleichen Durchsatz ein wesentlich kleinerer Reaktor eingesetzt werden kann, der natürlich wesentlich geringere Investitionen erfordert.

Das auf obigen Erkenntnissen basierende erfindungsgemäße Verfahren ermöglicht es weiterhin, die eingebrachte mechanische Rührenergie dazu auszunutzen, das Fließbett auf Reaktionstemperatur zu halten. Bei allen sonstigen Verfahren zur Mennigeherstellung muß die Apparatur ständig geheizt werden, weil sie sich nicht ausreichend isolieren läßt; Reaktionsenthalpie und Reibungswärmen gehen verloren. Beim erfindungsgemäßen Reaktor kann es dagegen sogar erforderlich werden, die Reaktion in bestimmten Zeitabschnitten zu kühlen, was in regeltechnischer Hinsicht ein großer Vorteil ist.

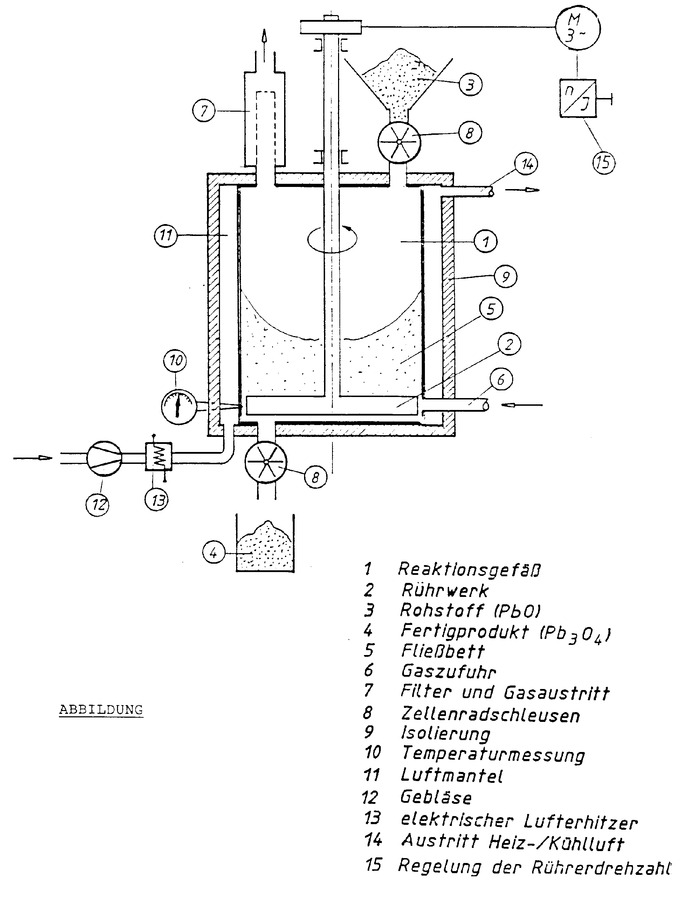

Im folgenden sei zunächst anhand der Abbildung erläutert, wie das erfindungsgemäße Verfahren durchgeführt werden kann:

In dem Reaktionsgefäß 1 wird durch das Rührwerk 2 ein Fließbett 5 aufrechterhalten; dieses besteht bei der Inbetriebnahme des Reaktors aus dem Fertigprodukt 4, welches vorgelegt wird. Mittels des Gebläses 12 wird über den Lufterhitzer 13 heiße Luft in den Reaktormantel 11 geblasen. Auf diese Weise wird das Aufheizen des Fließbettes, das auch ohne Heißluft möglich ist, stark beschleunigt. Während des Aufheizens wird über das Gaseinleitungsrohr 6 bereits Luft und/oder Sauerstoff zugeführt und die gewünschte Atmosphäre eingestellt. Nach Erreichen der Reaktionstemperatur, die mit dem Thermoelement 10 gemessen wird, erfolgt ein teilweises Ausschleusen des aufgeheizten vorgelegten Fertigproduktes; es ist aus Gründen der Produktivität zweckmäßig nicht weniger als 25 % und aus thermischen Gründen zweckmäßig, nicht mehr als 50% der Fließbettmenge auszutragen. Bevorzugt sind etwa 35 bis 45 %. Sofort danach wird der Vorstoff 3 über seine Zellenradschleuse 8 in ebenderselben Menge chargiert wie Fertigprodukt entleert wurde. So behält das Fließbett 5 seine Masse und der Antriebmotor des Rührwerks 2 seine vorgesehene Belastung.

Durch die Zufuhr des kalten Vorstoffs sinkt zwar die Temperatur des Fließbetts sprunghaft um bis zu 100°C ab, steig aber sehr schnell, innerhalb von 5 bis 10 min, durch die exotherme Reaktionsenthalpie wieder auf den vorgegebenen Wert, der im Bereich von ca. 500°C liegt. Die Füllung des Reaktionsgefäßes muß nun so eingestellt sein, daß die Rührenergie und die allmählich abnehmende Reaktionsenthalpie zu weiterer Temperaturerhöhung führen. Dieses darf aber nur bis zu einer bestimmten Solltemperatur geschehen, die zwischen 470 und 520°C, vorzugsweise bei ca. 500°C liegt. Eine weitere Steigerung wird dadurch vermieden, daß die überschüssige Wärme mittels Kühlluft, die das Gebläse 12 durch den Mantel 11 bläst, abgeführt wird; ein Regler sorgt dafür, daß im weiteren Verlauf der Charge die Solltemperatur nur um wenige Grade schwankt. Die Chargendauer hängt nun außer vom gewünschten Oxidationsgrad noch von verschiedenen anderen Parametern ab, wie Vorstoffqualität und Gaszusammensetzung, also dem Sauerstoffgehalt des eingeblasenen Gases. Der Sauerstoffgehalt kann zwischen 21 und 100% schwanken bzw. eingestellt werden. Man kann also auch mit Luft arbeiten. Die Chargendauer muß experimentell ermittelt werden, was durch wenige Versuche möglich ist. Sobald die gefundene Zeit abgelaufen ist, wird wie bei der beschriebenen Inbetriebnahme ein Teil des Fer-

3

tigprodukts abgezogen und danach die entsprechende Menge Vorstoff chargiert. Die Zyklen lassen sich beliebig lange fortsetzen. Betont sei abschließend, daß der Lufterhitzer 13 nur für die Inbetriebnahme und bei eventuellen Störungen eingeschaltet werden muß. Da nur ein Teil des Fertigprodukts abgezogen und demgemäß auch nur ein Teil des Vorprodukts chargiert wird, ist auch bei dieser Arbeitsstufe keine Fremdheizung erforderlich, da, wie oben erwähnt, die Temperatur wieder sehr schnell auf den vorgegebenen Wert steigt.

Aus der Schilderung des Prozeßablaufes ist leicht erkennbar, daß eine Automatisierung keine Schwierigkeiten macht. Die Rührgeschwindigkeit ist derart, daß immer ein fließbettartiger Zustand erhalten bleibt, kann jedoch automatisch je nachdem, ob man eine Temperaturerhöhung oder ein Halten der Temperatur wünscht, schneller oder langsamer eingestellt werden, wenn nur das Fließbett erhalten bleibt Bei einer großtechnischen Anlage mit z.B. 1400 mm Durchmesser sind Rührgeschwindigkeiten von 150 bis 200 Upm, insbesondere 150 bis 180 Upm zweckmäßig, während bei einem Technikumsreaktor mit 400 mm Durchmesser zur Erzielung der etwa gleichen Umfangsgeschwindigkeit eine Rührwerksdrehzahl von etwa 360 Upm erforderlich ist.

Nach dieser grundsätzlichen Erläuterung des Verfahrens wird im folgenden anhand von praktischen Ergebnissen gezeigt, welche Vorteile gegenüber herkömmlichen Verfahren erzielt werden können.

In ein Reaktorgefäß von 400 mm Durchmesser wurden 100 kg Mennige mit 30% $PbO_2$ gefüllt und auf 500°C aufgeheizt, wobei 35 l Sauerstoff pro Minute eingeleitet wurden. Nach Erreichen der Solltemperatur von etwa 500°C wurden 40 kg Mennige abgezogen und sofort danach 40 kg Blei-II-oxid chargiert. Nach 20 min hatte das Fließbett wieder den Anfangsgehalt von 30% $PbO_2$. Das Rührwerk drehte mit 360 Upm und nahm eine Leistung von knapp 8 kW auf, so daß sich folgende Leistungdaten ergeben:

120 kg/h        Produktionskapazität
66 kWh/t       Energieverbrauch
25 kg/t         Sauerstoffverbrauch
1,2             Sauerstoffüberschuß (Lambda)
20 min         Chargendauer

Setzt man anstelle von Sauerstoff Luft für den Prozeß ein, so verlängert sich die Chargendauer deutlich, oder es wird bei gleicher Zeit nur ein geringerer Oxidationsgrad erreicht; in dem angeführten Beispiel 23% $PbO_2$. Wenngleich das Verfahren also durchaus mit Luft arbeitet, ist es aber doch vorteilhafter, Sauerstoff einzusetzen; der Grund liegt in einem praktischen Problem, nämlich der Filtration der wesentlich größeren heißen Abgasmengen.

Jedenfalls wird die Atmosphäre im Fließbett durch gezielte Gaszufuhr auf ein gewünschtes Sauerstoffpotential eingestellt. Dies kann am einfachsten durch die Einstellung des Sauerstoffgehaltes des zugeführten Gases, aber auch stattdessen oder zusätzlich durch Variation des Druckes erfolgen.

Zum Vergleich sei aufgeführt, daß bei herkömmlichen Verfahren bei Verwendung von Luft Chargenzeiten von 10 bis 15 h erforderlich sind; die kürzeste bisher gefundene Oxidationszeit wird in der DE-PS 633620 genannt, wo sie in Sauerstoffatmosphäre und 1 bar Überdruck 3 h beträgt. Diese Zahlen verdeutlichen den Vorteil des erfindungsgemäße Verfahrens. Die im Beispiel verwendete Mennige mit 30% $PbO_2$, was etwa 86% $Pb_3O_4$ entspricht, entspricht einer üblichen Qualität. 33,5% PbO würde etwa 96% $Pb_3O_4$ entsprechen, was sich bei der gleichen Verfahrensweise unter Verwendung von Sauerstoff innerhalb einer Chargendauer von ca. 40 Minuten erzielen läßt.

Nach dem erfindungsgemäßen Verfahren hergestellte Mennige braucht nur vermahlen zu werden, wenn sie für Anstrichzwecke hergestellt wird. Für die Anwendung in der Glas-, Keramik- und Batterieindustrie ist die Feinheit direkt ausreichend, da es auf sie in jenen Anwendungen nicht besonders darauf ankommt.

Die Erfindung betrifft auch die Vorrichtung zur Durchführung dieses Verfahrens, wie sie in der beiliegenden Abbildung dargestellt und im Zusammenhang mit dem Verfahren beschrieben ist.

Diese Vorrichtung bestehend aus dem Reaktionsgefäß 1 mit Rührwerk 2, Gaszufuhr 6 and Gasauslaß 7 für das Oxidationsgas sowie Schleusen 8 für die Zuführung von Rohstoff und das Abführen von Fertigprodukt in einer Vorrichtung 10 zur Messung der Innentemperatur, zeichnet sich dadurch aus, daß der Reaktor 1 mit einer guten Isolierung 9 allseitig ummantelt ist und einen Hohlraum für einen Luftmantel 11 um den Reaktor aufweist, wobei dieser Luftmantel eine Luftzufuhr- und Luftabfuhrleitung aufweist und in der Luftzufuhrleitung ein Gebläse 12 und ein elektrischer Lufterhitzer 13 angeordnet sind.

Gemäß einer bevorzugten Ausführungsform ist die Drehzahl des Rührwerks 2 in Abhängigkeit von der Solltemperatur im Reaktor automatisch durch die schematisch dargestellte Vorrichtung 15 innerhalb vorgegebener Grenzen gesteuert, wobei die Grenzen so liegen, daß bei der unteren Grenze der Umdrehungszahl noch ein Fließbett aufrechterhalten wird und bei der oberen Grenze der Rührgeschwindigkeit noch keine merkliche Erosion des Reaktors eintritt.

Gemäß einer noch weiteren bevorzugten Ausführungsweise ist die Heizung bzw. Kühlung des Luftmantels 11 über das Gebläse 12 ebenfalls automatisch gesteuert, um eine vorher eingestellte Temperatur aufrecht zu erhalten oder um den Reaktor innerhalb einer bestimmten Zeit über den Luftmantel 11 zusätzlich zur Reaktionswärme aufzuheizen.

**Patentansprüche**

1. Verfahren zur beschleunigten Herstellung von Mennige, wobei das zu oxidierende Bleioxid in einem Rührwerksreaktor durch ein Rührwerk wie ein Fließbett in Schwebe gehalten wird, dadurch gekennzeichnet, daß aus dem fertigoxidierten Fließbett jeweils nur ein Teil des Fertigproduktes abgezogen und durch neues, zu oxidierendes Bleioxid ersetzt wird.

2. Verfahren nach Anspruch 1, dadurch gekennzeichnet, daß ein Viertel bis die Hälfte des Reaktorinhalts vom fertig oxidierten Reaktionsprodukt abgezogen und durch neuen Vorstoff ersetzt wird.

3. Verfahren nach Anspruch 1 oder 2, dadurch gekennzeichnet, daß die Rührwerksenergie dazu benutzt wird, die Reaktion auf der vorgegebenen Solltemperatur zu halten.

4. Verfahren nach Anspruch 1 bis 3, dadurch gekennzeichnet, daß die Atmosphäre im Fließbett durch gezielte Gaszufuhr auf ein gewünschtes Sauerstoffpotential eingestellt wird.

5. Verfahren nach Anspruch 4, dadurch gekennzeichnet, daß das Sauerstoffpotential durch den Sauerstoffgehalt des zugeführten Gases eingestellt wird.

6. Verfahren nach Anspruch 1 bis 5, dadurch gekennzeichnet, daß bei Inbetriebnahme des Reaktors Fertigprodukt vorgelegt und nach Aufheizen auf die vorgegebene Solltemperatur ein Teil dieses Fertigprodukts abgezogen und dann durch zu oxidierendes Bleioxid ersetzt wird und dieses Abziehen des Fertigproduktes und Ersatz durch neuen Vorstoff von Zeit zu Zeit je nach gewünschter Produktqualität wiederholt wird.

7. Vorrichtung zur Durchführung des Verfahrens nach Anspruch 1 bis 6 in Form eines Reaktorgefäßes mit Rührwerk, ausgerüstet mit Gaszufuhr und Gasauslaß für das Oxidationsgas sowie Schleusen für die Zuführung von Rohstoff und das Abführen von Fertigprodukt und einer Vorrichtung zur Messung der Innentemperatur, einer allseitigen Isolierungsummantelung (9) und einem Holraum für einen Luftmantel (11) um den Reaktor, wobei dieser Luftmantel eine Luftzufuhr- und Luftabfuhrleitung aufweist und in der Luftzufuhrleitung ein Gebläse (12) und ein elektrischer Lufterhitzer (13) angeordnet sind.

8. Vorrichtung nach Anspruch 7, dadurch gekennzeichnet, daß zusätzlich eine Automatik zur automatischen Einstellung der Rührerdrehzahl innerhalb vorbestimmter Grenzen vorgesehen ist.

9. Vorrichtung nach Anspruch 7 oder 8, dadurch gekennzeichnet, daß zusätzlich eine Automatik zur automatischen Einstellung des Luftgebläses (12) und des elektrischen Lufterhitzers (13) zum Heizen oder Kühlen des Reaktors innerhalb vorbestimmter Grenzen vorgesehen ist.

**Claims**

1. A process for the accelerated production of red lead oxide, the lead oxide to be oxidized in a stirrer reactor being kept in suspension like a fluidized bed by a stirrer, wherein at a time only part of the finished product is drawn off from the fully oxidized fluidized bed and replaced by new lead oxide to be oxidized.

2. The process according to claim 1, wherein a quarter to half of the reactor contents are drawn off from the fully oxidized reaction product and replaced by new starting material.

3. The process according to claim 1 or 2, wherein the stirrer energy is used to keep the reaction at the given desired temperature.

4. The process according to any one of claims 1 to 3, wherein the atmosphere in the fluidized bed is adjusted to a desired oxygen potential by selective gas supply.

5. The process according to claim 4, wherein the oxygen potential is adjusted by the oxygen content of the supplied gas.

6. The process according to any one of claims 1 to 5, wherein, in the initial operation of the reactor, finished product is initially supplied and, after heating up to the given nominal temperature, part of this finished product is drawn off and then replaced by lead oxide to be oxidized and this drawing-off of the finished product and the replacement by the new starting material are repeated from time to time depending on the desired product quality.

7. An apparatus for carrying out the process according to any one of claims 1 to 6 in the form of a reactor vessel having a stirrer, gas supply and gas outlet for the oxidation gas as well as sluices for the supply of raw material and the discharge of finished product and a device for measuring the internal temperature, an insulation sheath (9) on all sides and a cavity for an air jacket (11) around the reactor, this air jacket having an air supply line and an air discharge line, and a blower (12) and an electric air heater (13) being accommodated in the air supply line.

8. The apparatus according to claim 7, which comprises in addition an automatic mechanism for automatically adjusting the stirrer speed within given limits.

9. The apparatus according to claim 7 or 8, which comprises in addition an automatic mechanism for automatically adjusting the air blower (12) and the electric air heater (13) for heating or cooling the reactor within given limits.

## Revendications

1. Procédé pour la fabrication accélérée du minium, où l'oxyde de plomb à oxyder est maintenu en suspension comme un lit fluidisé dans un réacteur à agitateur grâce à un agitateur, caractérisé en ce qu'on prélève à chaque fois du lit fluidisé complètement oxydé seulement une partie du produit fini et on le remplace par du nouvel oxyde de plomb à oxyder.

2. Procédé selon la revendication 1, caractérisé en ce qu'on prélève entre un quart et la moitié du contenu du réacteur constitué du produit de réaction complètement oxydé et on le remplace par du précurseur de produit neuf.

3. Procédé selon la revendication 1 ou 2, caractérisé en ce qu'on utilise l'énergie de l'agitateur pour maintenir la réaction à la température de consigne prédéterminée.

4. Procédé selon les revendications 1 à 3, caractérisé en ce qu'on règle l'atmosphère du lit fluidisé à un potentiel d'oxygène souhaité, grâce à une introduction de gaz appropriée.

5. Procédé selon la revendication 4, caractérisé en ce qu'on règle le potentiel d'oxygène par la teneur en oxygène du gaz introduit.

6. Procédé selon les revendications 1 à 5, caractérisé en ce qu'on introduit le produit fini lors de la mise en fonctionnement du réacteur et on retire une partie de ce produit fini après le chauffage à la température de consigne prédéterminée et ensuite, on le remplace par de l'oxyde de plomb à oxyder et on recommence ce prélèvement de produit fini et son remplacement par du précurseur de produit neuf, de temps à autre, selon la qualité de produit souhaitée.

7. Dispositif pour la mise en oeuvre du procédé selon les revendications 1 à 6, sous forme de cuve de réacteur comportant un agitateur, pourvue d'une amenée de gaz et d'une sortie de gaz pour le gaz d'oxydation, ainsi que des sas pour l'introduction du produit de départ et pour l'évacuation du produit fini, et d'un dispositif pour mesurer la température interne, d'une enveloppe périphérique isolante (9) et d'un espace creux pour une enveloppe à circulation d'air (11) autour du réacteur, cette enveloppe à circulation d'air comportant une conduite d'amenée d'air et une conduite d'évacuation d'air, une soufflante (12) et un réchauffeur électrique d'air (13) étant disposés dans la conduite d'amenée d'air.

8. Dispositif selon la revendication 7, caractérisé en ce qu'il prévu en outre un dispositif automatique pour le réglage automatique de la vitesse de rotation de l'agitateur à l'intérieur de limites prédéterminées.

9. Dispositif selon la revendication 7 ou 8, caractérisé en ce qu'il est prévu en outre un dispositif automatique pour le réglage automatique de la soufflante d'air (12) et du réchauffeur électrique d'air (13), pour chauffer ou refroidir le réacteur, à l'intérieur de limites prédéterminées.

ABBILDUNG

1   Reaktionsgefäß
2   Rührwerk
3   Rohstoff (PbO)
4   Fertigprodukt ($Pb_3O_4$)
5   Fließbett
6   Gaszufuhr
7   Filter und Gasaustritt
8   Zellenradschleusen
9   Isolierung
10  Temperaturmessung
11  Luftmantel
12  Gebläse
13  elektrischer Lufterhitzer
14  Austritt Heiz-/Kühlluft
15  Regelung der Rührerdrehzahl